# EUROPEAN PATENT APPLICATION

(11) **EP 2 230 141 A1**
(43) Date of publication of application: **22.09.2010**
(21) Application number: 09425108.9
(22) Date of filing: 17.03.2009
(51) Int. Cl.: B60S 3/04

(54) **Self-service coin-operated car wash station with integrated brush apparatus for vehicle body wax-polishing**

(71) Applicant: Ma-Fra S.p.a., Baranzate (MI) 20021 (IT)
(72) Inventor: The designation of the inventor has not yet been filed
(74) Representative: Modiano, Micaela Nadia

(57) **Abstract**

Polishing system for vehicle body which consists of an integrated apparatus situated by the self-service car wash stations. A mixture of water, air and polishing product, mixed as foam through a coil (of any plastic material), is spread on the vehicle body by a integrated brush (on any size and shape and of any suitable material). This brush assures to the vehicle body, after the car wash and the wax spreading, a polish effect now available only by the specialized vehicle body-works.

## Description

The up-to-date technology in self-service car wash machines class has the use of two different polishing systems: the first one is manual used by private consumers. The operator applies the wax using a sponge and then he spreads it with a cloth by circular movements obtaining anyhow a result of a simple wax, often unsatisfactory.

The second one is mechanical and used by vehicle body works. By this system the wax is applied by an electric sander and then with a special polishing buffer. In this case, the polishing results of better qualita, but with a quite relevant cost.

The machine (Fig. n. 1) is characterized by the following technical elements:
1) Electrical equipment with coin box: it is a control panel with an electronic card which controls the length of time management and the coin box.
2) Brush equipment: it is the part of the machine made up by the lock block for the brush, by the coil, by the steel extension with injector and by the brush.
3) Air equipment: it is the air compressor.
4) Water equipment with mixer: it is the group of valves and air and water pressure gauges. Outer side of the machine is made a link-up for the water to the mixer that mix it with air created by the compressor.
5) Dispenser equipment: it's the dispenser pump for air and polishing product.
6) Machine equipment: it is the whole steel frame that shelters the electric devices and the engine.

### Machine functioning:

For the right functioning of this machine it's necessary a link to the water supply and to the electric current power.

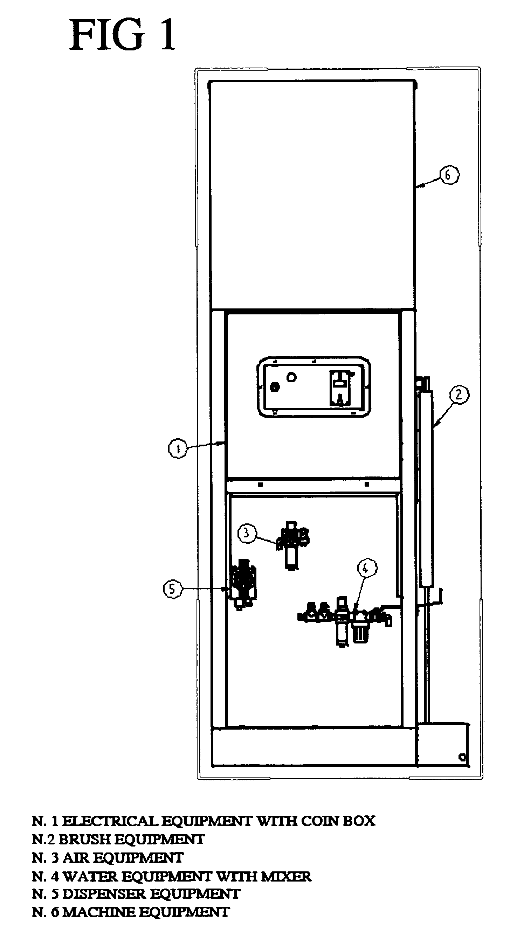

The program starting takes place by introducing a coin in the appropriate coin box (Fig. 1 n. 1) placed on the front side of the machine.

By introducing the coin you have the immediate release of the brush lock (Fig. 1 n. 2) and the opening of the electrovalve that powers the machine with water and air (Fig. 1 n. 4).

So you obtain the starting of the dispenser pump (Fig. 1 n. 5) (previously calibrated with quantities of water and polishing product) that intakes the product from the tank by a pump that is injected in the air/water group (Fig. 1 n. 4). At the same time air, water and product are mixed. The mixture is pushed out from the air/water group to the brush group and by the injector situated before the brush it generates the foamy product (Fig. 1 n.2).

The customer polishes its vehicle body by brushing (Fig. 1 n. 2).

When the time functioning of the apparatus is ended, the customer puts aside the brush and automatically the machine stops.

The originality of this machine is the application of a foamy product through the use of integrated apparatus which enables with a few simply efforts (as for example the introduction of a coin for the supply of the foamy polishing product and the handling of a brush) to obtain a more bright and lasting wax-polishing effect.

This invention enables a generalized use of this wax-polishing system through this mechanical device that is now available only by class operators.

This invention will be placed as the last step in all the self-service car wash stations after the brushes for the vehicle body car wash with the spear for the spreading and rinse out through water.

The invention can be applied even after the spreading of the simple application of wax.

The easy employment of this apparatus and its visibility in the self-service car wash stations will make more economical the best maintenance of the vehicles.

The only conditions for the laying and the employment of the machine will be the availability of a connection to the water system with at least 2 bar pressure and to the electric current power.

## Claims

1. Self-service coin-operated car wash station with integrated brush apparatus for vehicle body wax-polishing.

2. Machine (station) as per claim n. 1 that grants a *polish effect* of the vehicle body with spreading of a foamy product.

3. Machine as per claims n. 1 and 2 which enables a method of maintenance of the vehicle body by the self-service car wash stations, otherwise executed by professional vehicle body-works.
